# EUROPÄISCHE PATENTSCHRIFT

(11) **EP 3 850 314 B1**
(45) Veröffentlichungstag und Bekanntmachung des Hinweises auf die Patenterteilung: **16.04.2025**
(21) Anmeldenummer: 19749344.8
(22) Anmeldetag: 02.08.2019
(51) Int. Cl.: G01F 1/684, G01F 5/00, B60H 1/00, G01N 1/22, F01N 9/00, F02D 41/18, F01N 13/00, F02D 41/14

(54) **SENSOR ZUR BESTIMMUNG WENIGSTENS EINES PARAMETERS EINES DURCH EINEN MESSKANAL STRÖMENDEN FLUIDEN MEDIUMS**
SENSOR FOR DETERMINING AT LEAST ONE PARAMETER OF A FLUID MEDIUM FLOWING THROUGH A MEASUREMENT CHANNEL
CAPTEUR DESTINÉ À DÉTERMINER AU MOINS UN PARAMÈTRE D'UN MILIEU FLUIDE S'ÉCOULANT DANS UN CANAL DE MESURE

(30) Priorität: 14.09.2018 DE 102018215714
(43) Veröffentlichungstag der Anmeldung: 21.07.2021
(73) Patentinhaber: Robert Bosch GmbH, 70442 Stuttgart (DE)
(72) Erfinder: OTTO, Thomas, 70176 Stuttgart (DE)
(86) Internationale Anmeldenummer: PCT/EP2019/070935
(87) Internationale Veröffentlichungsnummer: WO 2020/052861

(56) Entgegenhaltungen:
- EP-A1- 2 245 570
- EP-A2- 1 384 868
- FR-A1- 3 063 249
- US-A- 5 708 585
- US-A1- 2008 163 683
- US-A1- 2009 188 235
- US-A1- 2012 186 570
- US-A1- 2016 146 651
- US-A1- 2016 161 313
- US-A1- 2016 290 849
- US-A1- 2016 313 164

## Beschreibung

### Stand der Technik

Aus dem Stand der Technik sind zahlreiche Verfahren und Vorrichtungen zur Bestimmung wenigstens einer Strömungseigenschaft fluider Medien, also von Flüssigkeiten und/oder Gasen, bekannt. Bei den Strömungseigenschaften als möglichem Parameter kann es sich dabei um beliebige physikalische und/oder chemische messbare Eigenschaften handeln, welche eine Strömung des fluiden Mediums qualifizieren oder quantifizieren. Insbesondere kann es sich dabei um eine Strömungsgeschwindigkeit und/oder einen Massenstrom und/oder einen Volumenstrom handeln.

Die Erfindung wird im Folgenden insbesondere unter Bezugnahme auf so genannte Heißfilmluftmassenmesser beschrieben, wie sie beispielsweise aus Konrad Reif (Hrsg.): Sensoren im Kraftfahrzeug, 1. Auflage 2010, Seiten 146-148, bekannt sind. Derartige Heißfilmluftmassenmesser basieren in der Regel auf einem Sensorchip, insbesondere einem Siliziumsensorchip, beispielsweise mit einer Sensormembran als Messoberfläche oder Sensorbereich, welcher von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind, wobei der eine Temperaturfühler stromaufwärts des Heizelements und der andere Temperaturfühler stromabwärts des Heizelements gelagert ist. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden.

Heißfilmluftmassenmesser sind üblicherweise als Steckfühler ausgestaltet, welcher fest oder austauschbar in ein Strömungsrohr einbringbar ist. Beispielsweise kann es sich bei diesem Strömungsrohr um einen Ansaugtrakt einer Brennkraftmaschine handeln.

Dabei durchströmt ein Teilstrom des Mediums wenigstens einen in dem Heißfilmluftmassenmesser vorgesehen Hauptkanal. Zwischen dem Einlass und dem Auslass des Hauptkanals ist ein Bypasskanal ausgebildet. Insbesondere ist der Bypasskanal derart ausgebildet, dass er einen gekrümmten Abschnitt zur Umlenkung des durch den Einlass des Hauptkanals eingetretenen Teilstroms des Mediums aufweist, wobei der gekrümmte Abschnitt im weiteren Verlauf in einen Abschnitt übergeht, in welchem ein Sensorchip angeordnet ist. Der zuletzt genannte Abschnitt stellt den eigentlichen Messkanal dar, in dem der Sensorchip angeordnet ist.

Bei herkömmlichen Heißfilmluftmassenmessern der beschriebenen Art ragt in der Regel ein Sensorträger mit dem darauf angebrachten oder eingebrachten Sensorchip in den Messkanal hinein. Beispielsweise kann der Sensorchip in den Sensorträger eingeklebt oder auf diesen aufgeklebt sein. Der Sensorträger kann beispielsweise mit einem Bodenblech aus Metall, auf welchem auch eine Elektronik, eine Ansteuer- und Auswerteschaltung (beispielsweise mit einem Schaltungsträger, insbesondere einer Leiterplatte) aufgeklebt sein kann, eine Einheit bilden. Beispielsweise kann der Sensorträger als angespritztes Kunststoffteil eines Elektronikmoduls ausgestaltet sein. Der Sensorchip und die Ansteuer- und Auswerteschaltung können beispielsweise durch Bondverbindungen miteinander verbunden werden. Das derart entstandene Elektronikmodul kann beispielsweise in ein Sensorgehäuse eingeklebt werden und der gesamte Steckfühler kann mit Deckeln verschlossen werden.

Heißfilmluftmassenmesser werden primär zur Bestimmung eines Ansaugluftmassenstroms eines Verbrennungsmotors verwendet. Darüber hinaus gibt es Heißfilmluftmassenmesser, die zusätzlich die Feuchtigkeit, die Temperatur oder den Druck der Ansaugluft bestimmen.

Trotz der zahlreichen Vorteile der aus dem Stand der Technik bekannten Sensoren beinhalten diese noch Verbesserungspotenzial. So ist bislang zur Ermittlung qualitativer Eigenschaften der Luft das Vorsehen weiterer bzw. zusätzlicher Sensoren erforderlich, was mit deutlichen zusätzlichen Kosten verbunden ist.

Aus der US 2016/016 1313 A1 ist ein Luftmassenmesser für den Ansaugluftmassenstrom einer Brennkraftmaschine bekannt, der neben einem ersten Sensorelement zur Erfassung der strömenden Luftmasse ein zweites Sensorelement zur Erfassung der in der Ansaugluft enthaltenen Feuchtigkeit aufweist.

Aus der US 5 708 585 ist eine Sensorvorrichtung zur Erfassung der Konzentration von brennbaren Elementen im Abgas einer Brennkraftmaschine bekannt.

Aus der US 2009/0188235 A1 ist ein Abgasnachbehandlungssystem mit einem Sensor zur Erfassung der Sauerstoffkonzentration im Abgas bekannt.

Aus der EP 2 245 570 A1 ist ein System zum Steuern von Fahrzeugemissionen in einem geografischen Gebiet bekannt, wobei das System ein Motorsteuersystem für ein Fahrzeug mit einem Motor und ein Steuersystem umfasst.

Aus der US 2018/0101997 A1 ist eine Steuerung bekannt, welche dazu ausgebildet ist, Kohlenwasserstoffemissionen eines ersten Fahrzeugs mittels eines Sensors im Luftansaugtrakt eines zweites Fahrzeugs zu erfassen.

### Offenbarung der Erfindung

Es wird daher ein Sensor zur Bestimmung wenigstens eines Parameters eines durch einen Messkanal strömenden fluiden Mediums vorgeschlagen, welcher die Nachteile bekannter Sensoren zumindest weitgehend vermeiden kann und der insbesondere eine Erfassung zusätzlicher qualitativer Eigenschaften des fluiden Mediums bzw. dessen qualitative Zusammensetzung erlaubt.

Ein erfindungsgemäßer Sensor zur Bestimmung wenigstens eines Parameters eines durch einen Messkanal strömenden fluiden Mediums, insbesondere eines Ansaugluftmassenstroms einer Brennkraftmaschine, weist ein Sensorgehäuse, insbesondere einen in ein Strömungsrohr eingebrachten oder einbringbaren Steckfühler, in dem der Messkanal ausgebildet ist, mindestens einen in dem Messkanal angeordneten ersten Sensorchip zur Bestimmung des Parameters des fluiden Mediums und ein Elektronikmodul auf. Das Elektronikmodul weist eine Ansteuer- und/oder Auswerteschaltung auf. Der Sensor weist weiterhin einen zweiten Sensorchip zur Bestimmung einer qualitativen Zusammensetzung des fluiden Mediums auf. Der zweite Sensorchip ist mit der Ansteuer- und/oder Auswerteschaltung verbunden.

Dadurch kann mit einem einzigen Sensor zusätzlich zu dem Parameter des durch den Messkanal strömenden fluiden Mediums eine Qualität des fluiden Medium erfasst werden, was das vorsehen weitere Sensoren zur Bestimmung diese Eigenschaft vermeidet. Der Sensor wird somit funktional erweitert.

Unter einer qualitativen Zusammensetzung des fluiden Mediums ist im Rahmen der vorliegenden Erfindung die Menge und Art der Bestandteile des fluiden Mediums zu verstehen.

Das Elektronikmodul weist eine Leiterplatte auf, wobei die Ansteuer- und/oder Auswerteschaltung auf der Leiterplatte angeordnet ist, wobei der zweite Sensorchip auf der Leiterplatte angeordnet. Somit lässt sich der zweite Sensorchip in kompakter Weise in dem Elektronikmodul integrieren.

Unter einer Leiterplatte ist dabei im Rahmen der vorliegenden Erfindung allgemein ein im Wesentlichen plattenförmiges Element zu verstehen, welches auch als Träger elektronischer Strukturen, wie beispielsweise Leiterbahnen, Anschlusskontakte oder Ähnliches, genutzt werden kann und vorzugsweise auch eine oder mehrere derartiger Strukturen aufweist. Grundsätzlich kommen dabei auch zumindest leichte Abweichungen von der Plattenform in Betracht und sollen begrifflich mit erfasst sein. Die Leiterplatte kann beispielsweise aus einem Kunststoffmaterial und/oder einem Keramikmaterial hergestellt sein, beispielsweise einem Epoxidharz, insbesondere einem faserverstärkten Epoxidharz. Insbesondere kann die Leiterplatte beispielsweise als Leiterplatte mit Leiterbahnen, insbesondere aufgedruckten Leiterbahnen (printed circuit board, PCB), ausgestaltet sein.

Der zweite Sensorchip ist ein mikro-elektro-mechanischer Sensorchip. Somit ist der zweite Sensorchip vergleichsweise klein und benötigt daher wenig Bauraum.

Unter einem mikro-elektro-mechanischen Sensorchip ist im Rahmen der vorliegenden Erfindung ein Sensorchip zu verstehen, dessen Komponenten kleinste Abmessungen im Bereich von 1 Mikrometer haben und als System zusammenwirken. Ein solches Mikrosystem besteht aus einem oder mehreren Sensorelementen und einer Steuerungselektronik, die auf dem Chip angeordnet sind. Dabei bewegt sich die Größe der einzelnen Komponenten im Bereich von wenigen Mikrometern.

Der zweite Sensorchip weist ein Substrat auf, das zumindest teilweise aus einem Halbleitermaterial, wie beispielsweise Silizium, hergestellt ist. Das Substrat trägt die Komponenten des Sensorchips.

Die qualitative Zusammensetzung umfasst erfindungsgemäß mindestens einen Anteil einer Gaskomponente in dem fluiden Medium und/oder ein Anteil eines Feststoffs in dem fluiden Medium, wobei die Gaskomponente mindestens eine Verbindung ausgewählt aus der Gruppe bestehend aus Kohlenstoffdioxid, Kohlenstoffmonoxid, Ozon, Schwefeldioxid und Stickstoffoxid ist. Alternativ oder zusätzlich ist der Feststoff mindestens ein Element ausgewählt aus der Gruppe bestehend aus Partikel, Ruß, Staub und Feinstaub.

Bei einer Weiterbildung weist das Sensorgehäuse einen Elektronikraum auf, in dem das Elektronikmodul angeordnet ist. Damit lässt sich das Elektronikmodul geschützt in dem Sensorgehäuse unterbringen.

Erfindungsgemäß ist der Sensor zum Verbinden mit einem Steuergerät eines Kraftfahrzeugs ausgebildet, wobei das Kraftfahrzeug eine Klimaanlage aufweist, wobei der zweite Sensorchip zum Ausgeben eines Messsignals ausgebildet ist, wobei das Messsignal von dem Steuergerät zur Steuerung und/oder Regelung der Klimaanlage verarbeitbar ist. Somit ist es möglich, mittels der durch den zweiten Sensorchip gewonnen Daten die Klimaanlage zu steuern oder regeln.

Bei einer Weiterbildung ist der Sensor zum Verbinden mit einem Steuergerät eines Kraftfahrzeugs ausgebildet, wobei das Kraftfahrzeug einen Verbrennungsmotor und einer Abgasnachbehandlungsvorrichtung zum Nachbehandeln von Abgas des Verbrennungsmotors aufweist, wobei der zweite Sensorchip zum Ausgeben eines Messsignals ausgebildet ist, wobei das Messsignal von dem Steuergerät zur Steuerung und/oder Regelung der Abgasnachbehandlungsvorrichtung verarbeitbar ist. Somit ist es möglich, mittels der durch den zweiten Sensorchip gewonnen Daten die Abgasnachbehandlungsvorrichtung zu steuern oder regeln.

Weiterhin wird ein Sensorsystem vorgeschlagen, das eine elektronische Datenverarbeitungsvorrichtung und eine Mehrzahl von Sensoren nach den zuvor genannten Ausführungen umfasst. Die Sensoren sind drahtlos mit der elektronischen Datenverarbeitungsvorrichtung verbunden, wobei der zweite Sensorchip zum Ausgeben eines Messsignals ausgebildet ist, wobei das Messsignal von der elektronischen Datenverarbeitungsvorrichtung zur Ermittlung von Informationen über einen Umgebungsluftzustand verarbeitbar ist. Damit lassen sich die Daten der jeweiligen Sensoren zentral erfassen und erlauben die Bestimmung von Informationen über die Qualität des fluiden Mediums an verschiedenen Orten. Werden die Sensoren beispielsweise in mehreren Kraftfahrzeugen verbaut, so lassen sich dadurch Informationen über die Luftqualität in der Umgebung der Kraftfahrzeuge gewinnen, die zentral durch eine Fernverarbeitungsvorrichtung verarbeitet werden. Auf diese Weise kann der Verkehr gezielt gesteuert werden, um die Luftqualität zu verbessern.

Unter der Hauptströmungsrichtung ist im Rahmen der vorliegenden Erfindung die lokale Strömungsrichtung des fluiden Mediums am Ort des Sensors bzw. der Sensoranordnung zu verstehen, wobei beispielsweise lokale Unregelmäßigkeiten, wie zum Beispiel Turbulenzen, unberücksichtigt bleiben können. Insbesondere kann unter der Hauptströmungsrichtung somit die lokale gemittelte Transportrichtung des strömenden fluiden Mediums verstanden werden. Die Hauptströmungsrichtung kann daher einerseits auf die Strömungsrichtung am Ort der Sensoranordnung selbst bezogen sein oder auch auf die Strömungsrichtung in dem Kanal innerhalb des Sensorgehäuses, wie beispielsweise am Ort des Sensorträgers oder des Sensorchips, wobei sich beide genannten Hauptströmungsrichtungen unterscheiden können. Im Rahmen der vorliegenden Erfindung wird deshalb stets angegeben, auf welchen Ort sich die Hauptströmungsrichtung bezieht. Sofern keine nähere Angabe gemacht ist, bezieht sich die Hauptströmungsrichtung auf den Ort der Sensoranordnung.

Im Rahmen der vorliegenden Erfindung kann der Sensorträger ganz oder teilweise als Schaltungsträger, insbesondere als Leiterplatte, ausgestaltet sein oder Teil eines Schaltungsträgers, insbesondere einer Leiterplatte, sein. Beispielsweise kann der Schaltungsträger, insbesondere die Leiterplatte, einen Fortsatz aufweisen, welcher den Sensorträger bildet und welcher in den Kanal, beispielsweise den Messkanal eines Heißfilmluftmassenmessers, hineinragt. Der übrige Teil des Schaltungsträgers, insbesondere der Leiterplatte, kann beispielsweise in einem Elektronikraum, in einem Gehäuse der Sensoranordnung oder eines Steckfühlers der Sensoranordnung untergebracht sein.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine perspektivische Ansicht eines Sensors,
- Figur 2: eine vergrößerte Ansicht eines Elektronikmoduls des Sensors,
- Figur 3: eine Darstellung der Übertragung von Signalen in einem Kraftfahrzeug,
- Figur 4: ein Beispiel für eine Signalverarbeitung in einem Steuergerät eines Kraftfahrzeugs und
- Figur 5: ein Beispiel für ein Sensorsystem.

### Ausführungsformen der Erfindung

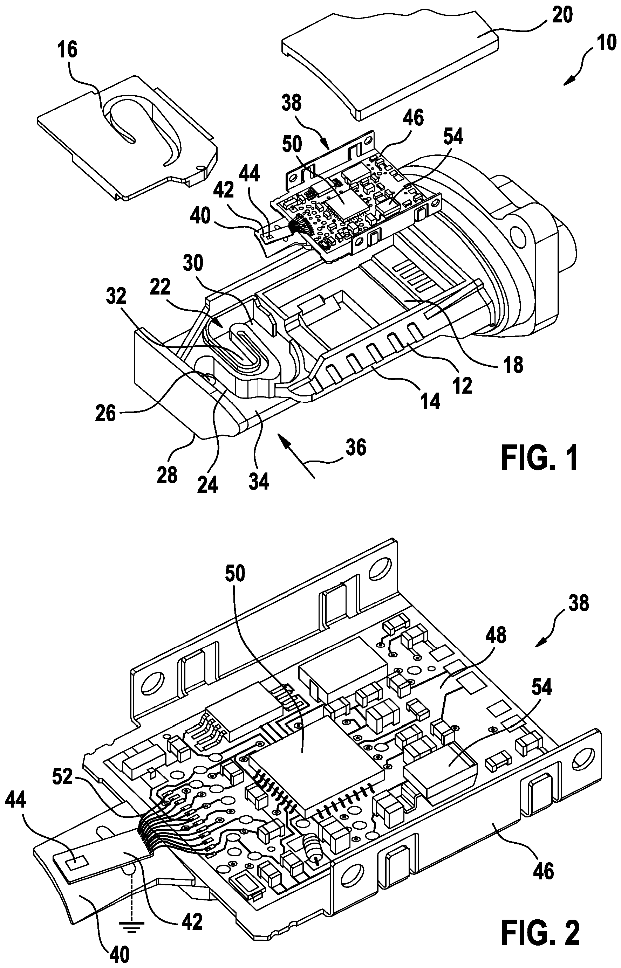

Figur 1 zeigt eine perspektivische Ansicht eines Sensors 10 zur Bestimmung eines Parameters eines fluiden Mediums. Der Sensor 10 ist als Heißfilmluftmassenmesser ausgestaltet und umfasst ein als Steckfühler ausgebildetes Sensorgehäuse 12, welches beispielsweise in ein Strömungsrohr, insbesondere einen Ansaugtrakt einer Brennkraftmaschine, eingesteckt werden kann. Das Sensorgehäuse 12 weist einen Gehäusekörper 14, einen Messkanaldeckel 16, einen Elektronikraum 18 sowie einen Elektronikraumdeckel 20 zum Verschließen des Elektronikraums 18 auf. In dem Gehäusekörper 16 ist eine Kanalstruktur 22 ausgebildet. Die Kanalstruktur 22 weist einen Hauptkanal 24 auf, welcher in einem Hauptstromauslass 26 beispielsweise auf der Unterseite 28 bezogen auf die Darstellung in Figur 1 des Sensorgehäuses 12 mündet, sowie einen von dem Hauptkanal 24 abzweigenden Bypass- bzw. Messkanal 30, welcher in einen Bypass- oder Messkanalauslass 32 mündet, der separat oder aber integriert ausgeführt sein kann. Durch die Kanalstruktur 22 kann über eine Einlassöffnung 34, die im eingesetzten Zustand einer Hauptströmungsrichtung 36 des fluiden Mediums am Ort des Sensorgehäuses 12 entgegenweist, eine repräsentative Menge des fluiden Mediums strömen.

Figur 2 zeigt eine vergrößerte Darstellung eines Elektronikmoduls 38 des Sensors 10. In einem eingesetzten Zustand des Elektronikmoduls 38 ragt ein Sensorträger 40 in den Messkanal 30. In diesen Sensorträger 40 ist ein erster Sensorchip 42 derart eingelassen, dass eine als Sensorbereich des ersten Sensorchips 42 ausgebildete mikromechanische Sensormembran 44 von dem fluiden Medium überströmbar ist. Der Sensorträger 40 ist mit dem ersten Sensorchip 42 Bestandteil des Elektronikmoduls 38. Das Elektronikmodul 38 weist weiter ein gebogenes Bodenblech 46 sowie eine darauf angebrachte, beispielsweise aufgeklebte Leiterplatte 48 mit einer Ansteuer- und/oder Auswerteschaltung 50 auf. Die Ansteuer- und/oder Auswerteschaltung 50 ist auf der Leiterplatter 48 angeordnet. Die Ansteuer- und/oder Auswerteschaltung 50 ist bei dem gezeigten Ausführungsbeispiel eine anwendungsspezifische integrierte Schaltung (ASIC = application-specific integrated circuit). Der Sensorchip 42 ist mit der Ansteuer- und/oder Auswerteschaltung 50 über elektrische Verbindungen 52, welche hier als Drahtbonding ausgestaltet sind, elektrisch verbunden. Das derart entstandene Elektronikmodul 38 wird in den Elektronikraum 18 des Gehäusekörpers 14 - seinerseits fester Bestandteil des Sensorgehäuses 12 - eingebracht, beispielsweise eingeklebt. Dabei ragt der Sensorträger 40 in die Kanalstruktur 22 hinein. Anschließend wird der Elektronikraum 18 von dem Elektronikraumdeckel 20 verschlossen.

Der Sensor 10 weist weiterhin einen zweiten Sensorchip 54 zur Bestimmung einer qualitativen Zusammensetzung des fluiden Mediums auf. Die qualitative Zusammensetzung umfasst mindestens einen Anteil einer Gaskomponente in dem fluiden Medium und/oder ein Anteil eines Feststoffs in dem fluiden Medium. Die Gaskomponente ist mindestens eine Verbindung ausgewählt aus der Gruppe bestehend aus Kohlenstoffdioxid, Kohlenstoffmonoxid, Ozon, Schwefeldioxid und Stickstoffoxid. Der Feststoff ist mindestens ein Element ausgewählt aus der Gruppe bestehend aus Partikel, Ruß, Staub und Feinstaub.

Der zweite Sensorchip 54 ist ein mikro-elektro-mechanischer Sensorchip. Insbesondere weist der zweite Sensorchip 54 ein Substrat auf, das zumindest teilweise aus einem Halbleitermaterial hergestellt ist. Das Halbleitermaterial ist beispielsweise Silizium. Alternativ ist das Halbleitermaterial Galliumarsenid. Das Substrat kann alternativ aus Kunststoff hergestellt sein. Der zweite Sensorchip 54 ist mit der Ansteuer- und/oder Auswerteschaltung 50 verbunden. Zu diesem Zweck ist der zweite Sensorchip 54 auf der Leiterplatte 48 angeordnet.

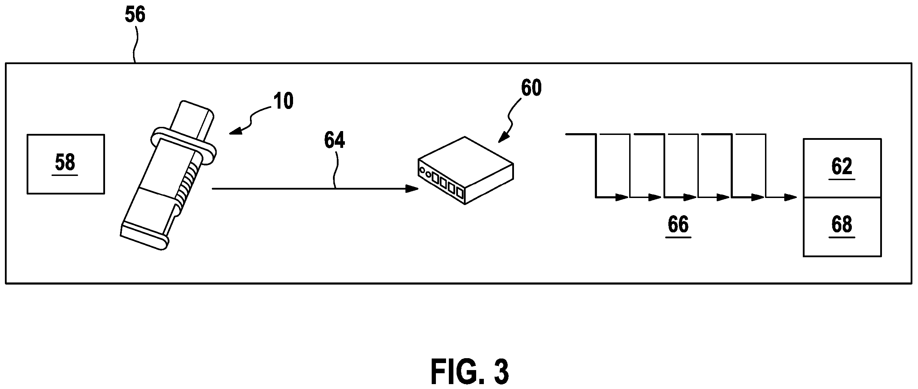

Figur 3 zeigt eine Darstellung der Übertragung von Signalen in einem Kraftfahrzeug 56. Der Sensor 10 ist beispielsweise in einem Ansaugtrakt eines Verbrennungsmotors 58 des Kraftfahrzeugs 56 angeordnet. Das Kraftfahrzeug 56 weist ein Steuergerät 60 auf. Der Sensor 10 ist mit dem Steuergerät 60 verbunden, so dass Daten bzw. Signale zwischen diesen ausgetauscht werden können. Das Kraftfahrzeug 56 weist weiterhin eine Klimaanlage 62 auf. Der zweite Sensorchip 54 ist zum Ausgeben eines Messsignals ausgebildet. Das Messsignal von dem Steuergerät 60 zur Steuerung und/oder Regelung der Klimaanlage 62 verarbeitbar ist. Beispielsweise wird mittels des zweiten Sensorchips 54 ein Messsignal gewonnen und an die Ansteuer- und/oder Auswerteschaltung 50 ausgegeben, wo eine qualitative Zusammensetzung des fluiden Mediums bestimmt bzw. berechnet wird. Die Ansteuer- und/oder Auswerteschaltung 50 wiederum gibt das Messsignal über einen vorbestimmten Kanal 64 an das Steuergerät 60 aus. Der Kanal 64 ist eine digitale Schnittstelle für die Kommunikation, wie beispielsweise SENT (Single Edge Nibble Transmission). Das Steuergerät 60 verarbeitet das Messsignal und gibt es an die Steuerung bzw. Regelung der Klimaanlage 62 über einen CAN-Bus 66 aus. Auf diese Weise kann bestimmt werden, ob und wieviel Frischluft und/oder Umluft die Klimaanlage 62 in das Innere des Kraftfahrzeugs 56 zuführen soll.

Das Kraftfahrzeug 56 kann alternativ oder zusätzlich eine Abgasnachbehandlungsvorrichtung 68 zum Nachbehandeln von Abgas des Verbrennungsmotors 58 aufweisen. Das Messsignal des zweiten Sensorchips 54 ist in der zuvor beschrieben Weise von dem Steuergerät 60 zur Steuerung und/oder Regelung der Abgasnachbehandlungsvorrichtung 68 verarbeitbar. Beispielsweise wird mittels des zweiten Sensorchips 54 das Messsignal gewonnen und an die Ansteuer- und/oder Auswerteschaltung 50 ausgegeben, wo eine qualitative Zusammensetzung des fluiden Mediums bestimmt bzw. berechnet wird. Die Ansteuer- und/oder Auswerteschaltung 50 wiederum gibt das Messsignal über den vorbestimmten Kanal 64 an das Steuergerät 60 aus. Das Steuergerät 60 verarbeitet das Messsignal und gibt es an die Steuerung bzw. Regelung der Abgasnachbehandlungsvorrichtung 68 über den CAN-Bus 66 aus. So lässt sich das Messsignal beispielsweise als Eingangsgröße in Stickstoffoxid- oder Ruß-Modellen berücksichtigen.

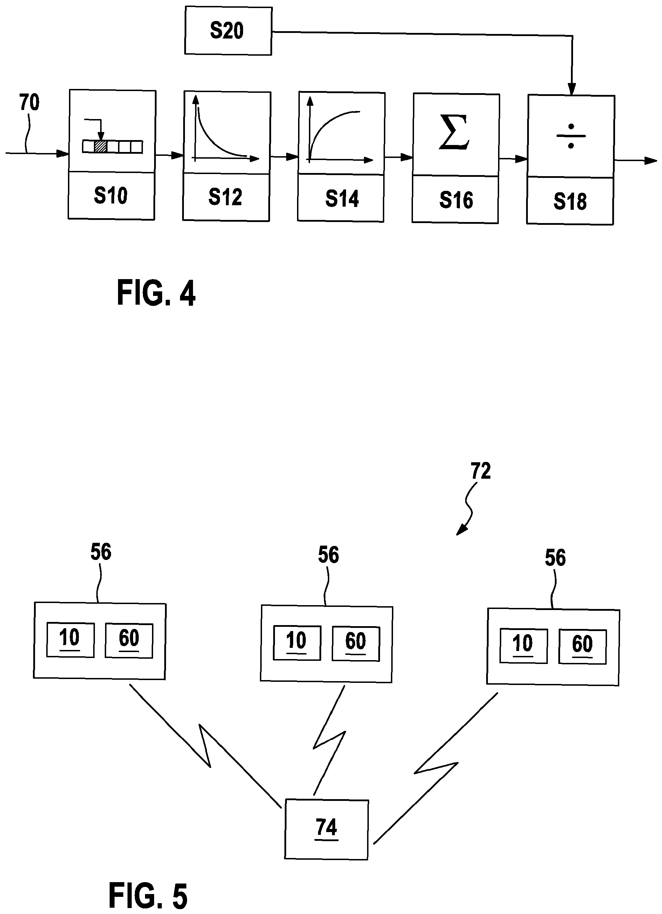

Figur 4 zeigt ein Beispiel für eine Signalverarbeitung in einem Steuergerät 60 eines Kraftfahrzeugs 56. In Schritt S10 erfolgt die Erfassung eines Rohsignals 70 durch das Steuergerät 60. Das Rohsignal 70 kann von dem zweiten Sensorchip 54 oder dem ersten Sensorchip 42 geliefert werden. In Schritt S12 erfolgt eine Signaltransformation. Das transformierte Signal wird in Schritt S14 einer Tiefpassfilterung unterzogen. Nach der Tiefpassfilterung erfolgt in Schritt S16 eine Summenberechnung. In Schritt S18 erfolgt schließlich die Berechnung eines gleitenden Mittelwerts, wobei aus Schritt S20 ein Triggersignal nach jeder halben Streckenänderung zugeführt wird. Der so gewonnene gleitende Mittelwert wird dann als Eingangsgröße für andere Steuerungen bzw. Regelungen im Kraftfahrzeug verwendet.

Figur 5 zeigt ein Beispiel für ein Sensorsystem 72. Das Sensorsystem 72 umfasst eine elektronische Datenverarbeitungsvorrichtung 74 und eine Mehrzahl von Sensoren 10 gemäß dem oben beschrieben Ausführungsbeispiel. Die Sensoren 10 sind drahtlos mit der elektronischen Datenverarbeitungsvorrichtung 74 verbunden sind. Der zweite Sensorchip 54 ist zum Ausgeben eines Messsignals ausgebildet, das von der elektronischen Datenverarbeitungsvorrichtung 74 zur Ermittlung von Informationen über einen Umgebungsluftzustand verarbeitbar ist. Beispielsweise sind die Sensoren 10 in Kraftfahrzeugen 56 montiert. Die Messsignale werden von den Steuergeräten 60 der Kraftfahrzeuge 56 drahtlos an die Datenverarbeitungsvorrichtung 74 übermittelt. anhand weiterer Daten der Kraftfahrzeuge 56, wie beispielsweise Positionsdaten, lässt sich somit die Information über die Luftqualität den Positionen der Kraftfahrzeuge 56 zuordnen. Somit können Informationen über die Luftqualität an verschiedenen Positionen erfasst werden, die wiederum zur Steuerung des Verkehrs dienen können.

## Patentansprüche

1. Sensor (10) zur Bestimmung wenigstens eines Parameters eines durch einen Messkanal (30) strömenden fluiden Mediums, wobei das strömende fluide Medium ein Ansaugluftmassenstrom einer Brennkraftmaschine ist, wobei der Sensor (10) ein Sensorgehäuse (12), insbesondere einen in ein Strömungsrohr eingebrachten oder einbringbaren Steckfühler, in dem der Messkanal (30) ausgebildet ist, mindestens einen in dem Messkanal (30) angeordneten ersten Sensorchip (42) zur Bestimmung des Parameters des fluiden Mediums und ein Elektronikmodul (38) aufweist, wobei das Elektronikmodul (38) eine Ansteuer- und/oder Auswerteschaltung (50) aufweist, wobei der Sensor (10) einen zweiten Sensorchip (54) zur Bestimmung einer qualitativen Zusammensetzung des fluiden Mediums aufweist, wobei der zweite Sensorchip (54) mit der Ansteuer- und/oder Auswerteschaltung (50) verbunden ist, wobei die qualitative Zusammensetzung mindestens einen Anteil einer Gaskomponente in dem fluiden Medium und/oder einen Anteil eines Feststoffs in dem fluiden Medium umfasst, wobei das Elektronikmodul (38) eine Leiterplatte (48) aufweist, auf der die Ansteuer- und/oder Auswerteschaltung (50) und der zweite Sensorchip (54) angeordnet sind, **dadurch gekennzeichnet, dass** die Gaskomponente mindestens eine Verbindung ausgewählt aus der Gruppe bestehend aus Kohlenstoffdioxid, Kohlenstoffmonoxid, Ozon, Schwefeldioxid und Stickstoffoxid ist und/oder der Feststoff mindestens ein Element ausgewählt aus der Gruppe bestehend aus Partikel, Ruß, Staub und Feinstaub ist, dass der zweite Sensorchip (54) ein mikro-elektro-mechanischer Sensorchip ist, wobei der zweite Sensorchip (54) ein Substrat aufweist, das zumindest teilweise aus einem Halbleitermaterial, insbesondere Silizium, hergestellt ist, wobei der Sensor (10) zum Verbinden mit einem Steuergerät (60) eines Kraftfahrzeugs (56) ausgebildet ist, wobei das Kraftfahrzeug (56) eine Klimaanlage (62) aufweist, wobei der zweite Sensorchip (54) zum Ausgeben eines Messsignals ausgebildet ist, wobei das Messsignal von dem Steuergerät (60) zur Steuerung und/oder Regelung der Klimaanlage verarbeitbar ist.

2. Sensor (10) nach Anspruch 1, wobei das Sensorgehäuse (12) einen Elektronikraum (18) aufweist, in dem das Elektronikmodul (38) angeordnet ist.

3. Sensor (10) nach einem der Ansprüche 1 oder 2, wobei der Sensor (10) zum Verbinden mit einem Steuergerät (60) eines Kraftfahrzeugs (56) ausgebildet ist, wobei das Kraftfahrzeug (56) einen Verbrennungsmotor (58) und eine Abgasnachbehandlungsvorrichtung (68) zum Nachbehandeln von Abgas des Verbrennungsmotors (58) aufweist, wobei der zweite Sensorchip (54) zum Ausgeben eines Messsignals ausgebildet ist, wobei das Messsignal von dem Steuergerät (60) zur Steuerung und/oder Regelung der Abgasnachbehandlungsvorrichtung (68) verarbeitbar ist.

4. Sensorsystem (72) umfassend eine elektronische Datenverarbeitungsvorrichtung (74) und eine Mehrzahl von Sensoren (10) nach einem der Ansprüche 1 bis 3, wobei die Sensoren (10) drahtlos mit der elektronischen Datenverarbeitungsvorrichtung (74) verbunden sind, wobei der zweite Sensorchip (54) zum Ausgeben eines Messsignals ausgebildet ist, wobei das Messsignal von der elektronischen Datenverarbeitungsvorrichtung (74) zur Ermittlung von Informationen über einen Luftzustand in der Umgebung der Sensoren (10) verarbeitbar ist.

## Claims

1. Sensor (10) for determining at least one parameter of a fluid medium flowing through a measurement channel (30), wherein the flowing fluid medium is an intake air mass flow of an internal combustion engine, wherein the sensor (10) has a sensor housing (12), in particular a plug-in sensor, which is inserted or can be inserted into a flow tube and in which the measurement channel (30) is formed, at least one first sensor chip (42) which is arranged in the measurement channel (30) and is intended to determine the parameter of the fluid medium, and an electronics module (38), wherein the electronics module (38) has a control and/or evaluation circuit (50), wherein the sensor (10) has a second sensor chip (54) for determining a qualitative composition of the fluid medium, wherein the second sensor chip (54) is connected to the control and/or evaluation circuit (50), wherein the qualitative composition comprises at least a portion of a gas component in the fluid medium and/or a portion of a solid in the fluid medium, wherein the electronics module (38) has a printed circuit board (48), on which the control and/or evaluation circuit (50) and the second sensor chip (54) are arranged, **characterized in that** the gas component is at least one compound selected from the group consisting of carbon dioxide, carbon monoxide, ozone, sulphur dioxide and nitrogen oxide and/or the solid is at least one element selected from the group consisting of particles, soot, dust and particulate matter, **in that** the second sensor chip (54) is a micro-electro-mechanical sensor chip, wherein the second sensor chip (54) has a substrate which is at least partially produced from a semiconductor material, in particular silicon, wherein the sensor (10) is designed for connection to a control unit (60) of a motor vehicle (56), wherein the motor vehicle (56) has an air conditioning system (62), wherein the second sensor chip (54) is designed to output a measurement signal, wherein the measurement signal can be processed by the control unit (60) in order to control and/or regulate the air conditioning system.

2. Sensor (10) according to Claim 1, wherein the sensor housing (12) has an electronics compartment (18), in which the electronics module (38) is arranged.

3. Sensor (10) according to either of Claims 1 and 2, wherein the sensor (10) is designed for connection to a control unit (60) of a motor vehicle (56), wherein the motor vehicle (56) has an internal combustion engine (58) and an exhaust gas aftertreatment device (68) for the aftertreatment of exhaust gas of the internal combustion engine (58), wherein the second sensor chip (54) is designed to output a measurement signal, wherein the measurement signal can be processed by the control unit (60) in order to control and/or regulate the exhaust gas aftertreatment device (68).

4. Sensor system (72) comprising an electronic data processing device (74) and a plurality of sensors (10) according to one of Claims 1 to 3, wherein the sensors (10) are wirelessly connected to the electronic data processing device (74), wherein the second sensor chip (54) is designed to output a measurement signal, wherein the measurement signal can be processed by the electronic data processing device (74) in order to determine information about an air condition in the vicinity of the sensors (10).

## Revendications

1. Capteur (10) permettant de déterminer au moins un paramètre d'un milieu fluide en écoulement à travers un canal de mesure (30), le milieu fluide en écoulement étant un débit massique d'air d'admission d'un moteur à combustion interne, dans lequel le capteur (10) présente un boîtier de capteur (12), en particulier une sonde à piquer, introduite ou pouvant être introduite dans un tuyau d'écoulement, dans laquelle est réalisé le canal de mesure (30), au moins une première puce de capteur (42) disposée dans le canal de mesure (30) pour déterminer le paramètre du milieu fluide, et un module électronique (38), dans lequel le module électronique (38) présente un circuit de pilotage et/ou d'évaluation (50), dans lequel le capteur (10) présente une deuxième puce de capteur (54) pour déterminer une composition qualitative du milieu fluide, la deuxième puce de capteur (54) étant reliée au circuit de pilotage et/ou d'évaluation (50), dans lequel la composition qualitative comprend au moins une part d'un composant gazeux dans le milieu fluide et/ou une part d'une matière solide dans le milieu fluide, dans lequel le module électronique (38) présente une carte de circuits imprimés (48) sur laquelle sont disposés le circuit de pilotage et/ou d'évaluation (50) et la deuxième puce de capteur (54), **caractérisé en ce que** le composant gazeux est au moins une composition sélectionnée dans le groupe composé de dioxyde de carbone, de monoxyde de carbone, d'ozone, de dioxyde de soufre et d'oxyde d'azote, et/ou la matière solide est au moins un élément sélectionné dans le groupe composé de particules, de suie, de poussière et de poussière fine, **en ce que** la deuxième puce de capteur (54) est une puce de capteur micro-électromécanique, dans lequel la deuxième puce de capteur (54) présente un substrat qui est fabriqué au moins partiellement à partir d'un matériau semiconducteur, en particulier de silicium, le capteur (10) étant réalisé pour être relié à un appareil de commande (60) d'un véhicule automobile (56), dans lequel le véhicule automobile (56) présente un climatiseur (62), dans lequel la deuxième puce de capteur (54) est réalisée pour émettre un signal de mesure, le signal de mesure pouvant être traité par l'appareil de commande (60) pour commander et/ou réguler le climatiseur.

2. Capteur (10) selon la revendication 1, dans lequel le boîtier de capteur (12) présente un espace électronique (18) dans lequel est disposé le module électronique (38).

3. Capteur (10) selon l'une quelconque des revendications 1 ou 2, dans lequel le capteur (10) est réalisé pour être relié à un appareil de commande (60) d'un véhicule automobile (56), le véhicule automobile (56) présentant un moteur thermique (58) et un dispositif de post-traitement des gaz d'échappement (68) pour le post-traitement des gaz d'échappement du moteur thermique (58), dans lequel le la deuxième puce de capteur (54) est réalisée pour émettre un signal de mesure, le signal de mesure pouvant être traité par l'appareil de commande (60) pour commander et/ou réguler le dispositif de post-traitement des gaz d'échappement (68).

4. Système de capteur (72), comprenant un dispositif de traitement de données électronique (74) et une pluralité de capteurs (10) selon l'une quelconque des revendications 1 à 3, dans lequel les capteurs (10) sont reliés sans fil au dispositif de traitement de données électronique (74), dans lequel la deuxième puce de capteur (54) est réalisée pour émettre un signal de mesure, le signal de mesure pouvant être traité par le dispositif de traitement de données (74) pour établir des informations concernant l'état de l'air dans l'environnement des capteurs (10).
